# EUROPÄISCHE PATENTSCHRIFT

(11) **EP 3 112 966 B1**
(45) Veröffentlichungstag und Bekanntmachung des Hinweises auf die Patenterteilung: **19.02.2020**
(21) Anmeldenummer: 15175209.4
(22) Anmeldetag: 03.07.2015
(51) Int. Cl.: G05B 19/048, G05B 19/406, H02H 3/00

(54) **SICHERHEITSSCHALTER FÜR EINE ELEKTRISCHE ANLAGE, INSBESONDERE FÜR EINE SICHERHEITSKETTE EINER AUFZUGANLAGE**
SAFETY SWITCH FOR AN ELECTRICAL INSTALLATION, IN PARTICULAR FOR A SAFETY CHAIN OF A LIFT ASSEMBLY
COMMUTATEUR DE SECURITE POUR UNE INSTALLATION ELECTRIQUE, EN PARTICULIER POUR UNE CHAINE DE SECURITE D'UNE INSTALLATION D'ASCENSEUR

(43) Veröffentlichungstag der Anmeldung: 04.01.2017
(73) Patentinhaber: Inventio AG, 6052 Hergiswil (CH)
(72) Erfinder: Michel, David, 8800 Thalwil (CH); Hess, Martin, 6340 Baar (CH)

(56) Entgegenhaltungen:
- EP-A1- 1 705 539
- EP-A1- 2 461 341

## Beschreibung

Die vorliegende Erfindung betrifft einen Sicherheitsschalter für eine elektrische Anlage, wie er insbesondere für eine Sicherheitskette einer Aufzuganlage eingesetzt werden kann. Die Erfindung betrifft ferner ein Verfahren zum Betreiben eines solchen Sicherheitsschalters.

Sicherheitsschalter werden in elektrischen Anlagen oder Systemen eingesetzt, bei denen Schaltvorgänge mit besonders hoher Zuverlässigkeit ausgeführt werden sollen. Beispielsweise kann bei Sicherheitsschaltern die Zuverlässigkeit durch ein Vorsehen gewisser Redundanzen erhöht werden, z.B. indem Bauteile oder Baugruppen, die für eine gewünschte Funktionsfähigkeit des Sicherheitsschalters relevant sind, mehrfach vorgesehen werden. Dabei können Redundanzen beispielsweise derart angelegt werden, dass der Sicherheitsschalter bei Auftreten eines Fehlers oder Defekts eines Bauteils oder einer Baugruppe in einen vordefinierten Zustand übergeht und unbeabsichtigte Zustände des Sicherheitsschalters somit vermieden werden können.
Solche hinsichtlich ihrer Ausfallsicherheit bzw. Zuverlässigkeit optimierte Sicherheitsschalter können insbesondere in sicherheitssensiblen Umgebungen eingesetzt werden, um beispielsweise Fehler oder einen Ausfall in einer elektrischen Anlage zuverlässig zu vermeiden. Sicherheitssensible Umgebungen können insbesondere dort vorhanden sein, wo ein Ausfall eines Schalters inakzeptable Risiken beispielsweise für eine Gesundheit von Nutzern der damit geschalteten elektrischen Anlage nach sich ziehen könnte.

Ein Beispiel für eine sicherheitssensible Umgebung, das heißt ein mögliches Einsatzgebiet von Sicherheitsschaltern, sind Beförderungsanlagen wie beispielsweise Aufzuganlagen, Fahrtreppen, Förderbänder etc. Solche Beförderungsanlagen werden unter anderem dazu eingesetzt, Menschen zu transportieren und müssen daher besonderen Sicherheitsanforderungen genügen. Hierzu wird in Beförderungsanlagen häufig eine Vielzahl von Sicherheitsschaltern eingesetzt, um verschiedenste sicherheitsrelevante Komponenten auf korrekte Funktionsfähigkeit bzw. einen sicheren Betriebszustand hin zu überwachen.

Beispielsweise können in einer als Aufzug ausgestalteten Beförderungsanlage mehrere Sicherheitsschalter vorgesehen sein, mithilfe derer z.B. ein korrektes Schließen einer Aufzugtür überwacht wird oder überwacht wird, dass sich keine Person innerhalb eines beispielsweise durch eine Lichtschranke überwachten Bereiches nahe einer Aufzugtüre befindet. Bei einer solchen Aufzuganlage kann eine Betriebssicherheit beispielsweise dadurch gewährt werden, dass ein eine Aufzugskabine antreibender Motor von einer Steuerung ausschließlich dann zum Verfahren der Aufzugskabine angesteuert wird, wenn alle hierfür relevanten Sicherheitsschalter innerhalb der Aufzuganlage aufgrund ihres Schaltzustandes angeben, dass ein solches Verfahren der Aufzugskabine risikolos durchgeführt werden kann. Die Sicherheitsschalter können hierzu beispielsweise in Serie zu einer Sicherheitskette zusammengeschaltet sein. Es ist offensichtlich, dass in einem solchen Fall sehr hohe Anforderungen an die Zuverlässigkeit der hierfür eingesetzten Schalter gesetzt werden müssen, da beispielsweise ein Verfahren der Aufzugskabine bei nicht ordnungsgemäß verschlossener Kabinentür ein Risiko schwerster Verletzungen für einen im Türbereich stehenden Menschen mit sich bringen kann.

Für einen Sicherheitsschalter in einer Sicherheitskette einer Aufzuganlage kann daher beispielsweise gefordert werden, dass er bei einem Fehler oder einem Defekt einer seiner Komponenten zuverlässig in einen geöffneten Zustand übergeht. Dadurch kann sichergestellt werden, dass die Sicherheitskette auf jeden Fall unterbrochen wird, sobald der Sicherheitsschalter eine korrekte Funktion einer von ihm zu überwachenden Aufzugkomponente aufgrund beispielsweise eines eigenen Fehlers oder Defektes nicht mehr gewährleisten kann.

In der EP 2 326 006 A1 wird daher ein Schalter einer elektrischen Anlage beschrieben, wie er insbesondere für Beförderungsanlagen eingesetzt werden kann. Bei diesem Schalter werden wenigstens zwei in Serie geschaltete Halbleiterschalter mithilfe einer Steuereinheit betätigt, wobei der gesamte Schalter lediglich dann in einem geschlossenen Zustand ist, wenn beide Halbleiterschalter von der Steuereinheit gleichzeitig in einen geschlossenen Zustand geschaltet werden.

Die EP 2 461 341 A1 betrifft ein fehlersicheres Schaltmodul zum Schalten einer Last mit einer Reihenschaltung. Um ein Verschweißen bei einem Schaltkontakt des Schaltmoduls zu vermeiden, wird ein Schaltmittel in einer Reihenschaltung mit einem Freigabemittel an einer Ansteuerleitung angeordnet ist, wobei das Freigabemittel ausgestaltet ist, um das Ansteuern des Schaltmittels zu verzögern.

Es wurde jedoch beobachtet, dass herkömmliche einfach aufgebaute Sicherheitsschalter nicht immer zuverlässige Schaltvorgänge garantieren können und gegebenenfalls komplizierte ergänzende Sicherungsmaßnahmen getroffen werden müssen.

Es kann daher ein Bedarf an einem Sicherheitsschalter für eine elektrische Anlage bestehen, dessen Zuverlässigkeit beim Durchführen von Schaltvorgängen sehr hoch ist. Ferner kann ein Bedarf an einem Sicherheitsschalter bestehen, bei dem eine solche hohe Zuverlässigkeit mit verhältnismäßig einfachen technischen Mitteln und somit auch möglichst kostengünstig umgesetzt werden kann. Es kann ferner ein Bedarf an einem Verfahren zum Betreiben eines solchen Sicherheitsschalters bestehen, mithilfe dessen eine hohe Zuverlässigkeit beim Durchführen von Schaltvorgängen mittels dieses Sicherheitsschalters erreicht werden kann. Ferner kann ein Bedarf an einer Sicherheitskette einer Aufzuganlage bestehen, bei der Schaltvorgänge mit hoher Zuverlässigkeit durchgeführt werden können.

Solchen Bedürfnissen kann mit den Gegenständen, wie sie in den unabhängigen Ansprüchen definiert sind, entsprochen werden. Vorteilhafte Ausgestaltungen sind unter anderem in den abhängigen Ansprüchen definiert.

Gemäß einem ersten Aspekt der Erfindung wird ein Sicherheitsschalter für eine elektrische Anlage beschrieben, wie er insbesondere in einer Sicherheitskette einer Aufzuganlage verwendet werden kann. Der Sicherheitsschalter weist wenigstens zwei Schalter, wenigstens eine Steuereinheit und wenigstens eine Halteeinheit auf. Die beiden Schalter sind miteinander und mit einem durch den Sicherheitsschalter zu schaltenden Lastelement in Serie geschaltet. Dabei ist jeder der Schalter dazu ausgestaltet, dass er durch Empfangen eines Schließsignals in einem geschlossenen Zustand gehalten wird und bei Fehlen des Schließsignals in einen geöffneten Zustand übergeht. Die Steuereinheit ist dazu ausgestaltet, bei Vorliegen eines Soll-Zustandes das Schließsignal zu erzeugen und an zumindest einen der Schalter zu leiten und bei Vorliegen eines Nicht-Soll-Zustandes kein Schließsignal an den zumindest einen Schalter zu leiten. Der Soll-Zustand sowie der Nicht-Soll-Zustand können jeweils beispielsweise anhand von Signalen von zum Beispiel Sensoren, Aktuatoren oder Ähnlichem bzw. einem Fehlen solcher Signale ermittelt werden. Von herkömmlichen Sicherheitsschaltern unterscheidet sich der hierin vorgeschlagene Sicherheitsschalter unter anderem durch das Vorsehen der Halteeinheit. Die Halteeinheit ist derart ausgestaltet, dass sie von der Steuereinheit dazu veranlasst werden kann, maximal für eine vorgegebene Haltedauer das Schließsignal zu erzeugen und unabhängig von der Steuereinheit an den zumindest einen der Schalter zu leiten.

Ideen zu Ausführungsformen des erfindungsgemäßen Sicherheitsschalters können unter anderem als auf den nachfolgend beschriebenen Gedanken und Erkenntnissen beruhend angesehen werden.

Wie einleitend angedeutet, sind Sicherheitsschalter bekannt, die hinsichtlich einiger Merkmale gleich oder ähnlich ausgestaltet sind, wie der hierin vorgeschlagene Sicherheitsschalter. Unter anderem sind zwei Schalter derart miteinander und mit einem zu schaltenden Lastelement in Serie geschaltet, dass, wenn einer der Schalter geöffnet ist, ein Stromkreis durch das Lastelement hindurch unterbrochen ist. Mit anderen Worten kann für ein zuverlässiges Schließen bzw. Öffnen eines Sicherheitsschalters dadurch eine gewisse Redundanz geschaffen werden, dass in dem Sicherheitsschalter zwei separate Schalter hintereinander in Serie geschaltet sind, so dass es genügt, einen dieser Schalter zu öffnen, um dadurch den gesamten Sicherheitsschalter in einen geöffneten Zustand zu versetzen. Um den Sicherheitsschalter in einem geschlossenen Zustand zu halten, müssen jeweils beide darin vorgesehenen Schalter durch Anlegen des Schließsignals in dem geschlossenen Zustand gehalten werden.

Die Schalter selbst können vorteilhaft als elektronische Schalter, insbesondere Halbleiterschalter, vorgesehen sein, so dass der Sicherheitsschalter als elektronische Schaltung, vorzugsweise sogar als integrierte Halbleiterschaltung, ausgestaltet werden kann. Als Halbleiterschalter können z.B. ein MOSFET, ein IGBT, ein Bipolartransistor, ein Thyristor oder ähnliches eingesetzt werden.

Die in dem Sicherheitsschalter vorzusehende wenigstens eine Steuereinheit kann ebenfalls als elektronische Schaltung ausgebildet sein und beispielsweise zusammen mit den elektronischen Schaltern eine Gesamtschaltung bilden. Die Steuereinheit ist dabei dazu in der Lage, zu erkennen, ob beispielsweise in einem zu überwachenden System ein Soll-Zustand vorliegt oder ob ein Nicht-Soll-Zustand vorliegt. Der Soll-Zustand kann beispielsweise angenommen werden, wenn Sensoren, Aktuatoren oder Ähnliches, die in dem zu überwachenden System zur Detektierung von Zuständen dieses Systems vorgesehen sind, Signale angeben, die als Indikator oder als Voraussetzung dafür angesehen werden können, dass der Sicherheitsschalter in einem geschlossenen Zustand gehalten werden darf. In entsprechender Weise kann ein Nicht-Soll-Zustand dadurch erkannt werden, dass Signale von Sensoren, Aktuatoren oder Ähnlichem ermittelt werden, die als Indikator dafür anzusehen sind, dass das zu überwachende System sich in einem Zustand befindet, in dem der Sicherheitsschalter nicht geschlossen sein darf, bzw. dass Signale, die einen Soll-Zustand angeben, aktuell fehlen.

Bezogen auf das eingangs genannte Beispiel eines Sicherheitsschalters in einer Aufzuganlage kann die Steuereinheit beispielsweise aus Signalen von Sensoren, Aktuatoren oder Ähnlichem rückschließen, ob eine Aufzugtür aktuell korrekt geschlossen ist bzw. ob eine einen Bereich innerhalb der Aufzugskabine überwachende Lichtschranke aktuell freigegeben ist. Zugehörige Signale können als Indikator dafür verstanden werden, dass sich die Aufzugskabine in einem ordnungsgemäßen Soll-Zustand befindet, so dass sie durch eine Antriebseinheit verfahren werden darf und somit der zugehörige Sicherheitsschalter geschlossen sein darf. Für den Fall, dass eines der Signale angibt, dass die Aufzugtür beispielsweise nicht korrekt geschlossen ist und/oder sich eine Person in dem durch die Lichtschranke überwachten Bereich nahe der Aufzugtür befindet, kann dies als das Vorliegen eines Nicht-Soll-Zustandes interpretiert werden und daraufhin ein Schließen des zugehörigen Sicherheitsschalters durch fehlendes Erzeugen bzw. Weiterleiten des Schließsignals an zumindest einen der darin befindlichen Schalter verhindert werden und somit der gesamte Sicherheitsschalter in einen geöffneten Zustand versetzt werden.

Das Schließsignal, aufgrund dessen die einzelnen Schalter in dem Sicherheitsschalter in ihren geschlossenen Zustand übergehen sollen, kann in unterschiedlicher Weise ausgestaltet sein. Beispielsweise kann ein Schließsignal einem Anlegen einer bestimmten elektrischen Schließspannung entsprechen, welche in einem vorgegebenen Spannungsbereich liegen sollte. Wenn die Steuereinheit eine solche Schließspannung erzeugt und als Schließsignal an den zumindest einen Schalter leitet, kann dieser hierdurch zu einem Übergehen in den geschlossenen Zustand veranlasst werden. Beispielsweise kann die Schließspannung an ein Gate eines MOSFETs angelegt werden und den MOSFET dadurch zum Schließen einer elektrisch leitenden Verbindung veranlassen. Wenn andererseits kein Schließsignal, d.h. im genannten Beispiel keine geeignete Schließspannung, an den Schalter angelegt wird, bleibt dieser in seinem geöffneten Zustand bzw. geht in den geöffneten Zustand über. Das Fehlen eines Schließsignals kann im genannten Beispiel sowohl dadurch realisiert sein, dass gar keine Spannung an den Schalter angelegt wird, als auch dadurch, dass zwar eine Spannung angelegt wird, diese aber nicht im für das Schließsignal vorgegebenen Spannungsbereich liegt. Als Schließsignal sind neben bestimmten vorgegebenen elektrischen Spannungen auch andere technische Signale wie beispielsweise bestimmte Stromänderungen, Spannungsänderungen, zeitlich variierende elektrische Signale, Frequenzen etc. denkbar.

Um derartige Sicherheitsschalter bei Vorliegen des Soll-Zustandes kontinuierlich in geschlossenem Zustand halten zu können, müssen beide in dem Sicherheitsschalter vorgesehenen Schalter kontinuierlich im geschlossenen Zustand gehalten werden. Bei herkömmlichen Sicherheitsschaltern muss die Steuereinheit hierzu im Allgemeinen in der Lage sein, kontinuierlich das notwendige Schließsignal zu erzeugen und an jeden der Schalter zu leiten. Ein solches zeitlich durchgehendes Erzeugen des Schließsignals kann jedoch nicht immer einfach realisiert werden.

Angesichts dieser Erkenntnis wird vorgeschlagen, den Sicherheitsschalter zusätzlich mit einer oder mehreren Halteeinheiten auszustatten, welche dazu ausgelegt sind, das Schließsignal unabhängig von der Steuereinheit erzeugen und an den zumindest einen der Schalter leiten zu können, um diesen zeitweilig in dem geschlossenen Zustand zu halten. Da die Halteeinheit im Gegensatz zur Steuereinheit ein solches Erzeugen und Weiterleiten des Schließsignals an den Schalter unabhängig davon vornimmt, ob ein Soll-Zustand oder ein Nicht-Soll-Zustand erkannt wird, soll die Halteeinheit lediglich in der Lage sein, das Schließsignal maximal für eine vorgegebene Haltedauer an den Schalter zu erzeugen und weiterzuleiten. Das heißt, spätestens nach Ablauf der vorgegebenen Haltedauer soll die Halteeinheit automatisch nicht mehr das Schließsignal an den Schalter anlegen, so dass dieser in den geöffneten Zustand übergeht, sofern nicht parallel das Schließsignal wieder von der Steuereinheit selbst an den Schalter angelegt wird.

Mit anderen Worten ist der hierin vorgeschlagene Sicherheitsschalter aufgrund der darin vorgesehenen Halteeinheit dazu in der Lage, kurzzeitig, das heißt maximal für die vorgegebene Haltedauer, in dem geschlossenen Zustand gehalten zu werden, auch wenn die Steuereinheit in diesem Zeitraum nicht das üblicherweise hierfür notwendige Schließsignal an den zugehörigen Schalter selbst anlegt, sondern dies durch die Halteeinheit zwischenzeitlich übernommen wird. Aus Sicherheitsgründen ist die Dauer, innerhalb derer die Halteeinheit diese üblicherweise von der Steuereinheit auszuführende Funktion kurzzeitig übernimmt, auf eine Maximaldauer begrenzt, die den durch den Sicherheitsschalter zu implementierenden Sicherheitsanforderungen Rechnung tragen soll.

Die Steuereinheit ist dazu ausgestaltet, die Halteeinheit vor einem von der Steuereinheit durchzuführenden Reset oder Selbsttest zu veranlassen, maximal für die vorgegebene Haltedauer das Schließsignal zu erzeugen und an den zumindest einen Schalter anzulegen.

In einer noch konkreteren Ausführungsform kann die Steuereinheit dazu ausgestaltet sein, in regelmäßigen Zeitintervallen oder bei Vorliegen eines von außen anliegenden Triggersignals das Erzeugen des Schließsignals im Rahmen eines Resets und/oder Selbsttests kurzzeitig zu unterbrechen und zuvor die Halteeinheit dazu zu veranlassen, maximal für die vorgegebene Haltezeitdauer das Schließsignal unabhängig von der Steuereinheit zu erzeugen und an den zumindest einen der Schalter zu leiten.

Solche Ausführungsformen können der Tatsache Rechnung tragen, dass Steuereinheiten, wie sie im beschriebenen Sicherheitsschalter eingesetzt werden können, über Prozessoren oder Schaltungen verfügen können, welche beispielsweise speziell für die von ihnen zu implementierenden, sicherheitskritischen Anwendungen angepasst wurden. Als Teil einer solchen speziellen Anpassung kann die Steuereinheit dazu ausgelegt sein, sich von Zeit zu Zeit selbst zurück zu setzen und neu zu starten, das heißt, zu resetten, und/oder von Zeit zu Zeit einen Selbsttest durchzuführen. Im Rahmen eines solchen Resets oder Selbsttests kann es unvermeidlich sein, dass die Steuereinheit kurzzeitig nicht in der Lage ist, das zum Geschlossenhalten des zugehörigen Schalters notwendige Erzeugen des Schließsignals selbst auszuführen. Um zu gewährleisten, dass der Sicherheitsschalter dennoch geschlossen bleibt, kann sich die Steuereinheit der Halteeinheit bedienen, welche für den zu überbrückenden Zeitraum quasi stellvertretend das Schließsignal an den zugehörigen Schalter anlegen kann.

Hierbei sollte die Zeitdauer, die die Steuereinheit zum Durchführen des Resets und/oder Selbsttests benötigt und während derer die Steuereinheit nicht dazu in der Lage ist, selbst das Schließsignal an den Schalter anzulegen, vorzugsweise kürzer sein als die Haltedauer, während derer die Halteeinheit maximal von sich aus das Schließsignal an den Schalter anlegen kann. Hierdurch kann erreicht werden, dass zumindest für die Zeitdauer, in der die Steuereinheit selbst aus technischen Gründen nicht in der Lage ist, das Schließsignal an den Schalter anzulegen, die Halteeinheit diese Aufgabe übernehmen kann.

Gemäß einer Ausführungsform kann die Haltedauer typischerweise zwischen 1 µs und 100ms, vorzugsweise zwischen 1ms und 20ms, liegen. Insbesondere sollte die vorgegebene Haltedauer einerseits ausreichend lange gewählt werden, damit die Halteeinheit so lange eine mangelnde Betriebsfähigkeit der Steuereinheit, beispielsweise während des Resets oder Selbsttests, durch ein eigenes Erzeugen und Anlegen des Schließsignals an den Schalter überbrücken kann, bis die Steuereinheit selbst nach Vollendung des Resets oder Selbsttests wieder hierzu in der Lage ist. Andererseits sollte die Haltedauer aus Sicherheitsgründen nicht übermäßig lange gewählt werden. Dies soll insbesondere berücksichtigen, dass während der Haltedauer nicht zwingend durch die Steuereinheit berücksichtigt wird, ob aktuell ein Soll-Zustand vorliegt oder ob dieser kurzfristig gestört ist und somit ein Nicht-Soll-Zustand vorliegt. Stattdessen legt die Halteeinheit, einmal anfänglich veranlasst durch die Steuereinheit, für die Haltedauer selbst die Schließspannung an den Schalter an und berücksichtigt dabei nicht, ob der Soll-Zustand weiterhin gegeben ist. Um einen solchen, nicht überwachten Zeitraum zu begrenzen, wird die Haltedauer vorzugsweise maximal auf 100ms, vorzugsweise auf maximal 20ms, begrenzt. Spätestens nach dieser Haltedauer kann die Halteeinheit, beispielsweise aufgrund ihrer physikalischen Eigenschaften, kein Schließsignal mehr an den ihr zugeordneten Schalter anlegen, so dass dieser selbsttätig in seinen geöffneten Zustand übergehen würde, sofern zwischenzeitlich nicht wieder von der Steuereinheit das Schließsignal an diesen Schalter angelegt wird.

Gemäß einer Ausführungsform sind die Steuereinheit und die Halteeinheit gemeinsam dazu ausgestaltet, dass die Steuereinheit die Halteeinheit ausschließlich durch Übermitteln eines vorbestimmten zeitlich variierenden Signals dazu veranlassen kann, nachfolgend maximal für die vorgegebene Haltedauer das Schließsignal zu erzeugen und an den zumindest einen Schalter zu leiten. Mit anderen Worten kann in dem vorgeschlagenen Sicherheitsschalter eine Abstimmung zwischen der Steuereinheit und der Halteeinheit derart vorgenommen werden, dass die Steuereinheit nicht beispielsweise mit einem sehr simplen Signal die Halteeinheit dazu veranlassen kann, kurzzeitig ihre Aufgabe des Anlegens des Schließsignals an den Schalter zu übernehmen. Stattdessen soll eine solche Aufgabenübertragung vorzugsweise nur durch Übermitteln eines komplexeren, zeitlich variierenden Signals möglich sein.

Auf diese Weise kann sichergestellt werden, dass nicht lediglich beispielsweise aufgrund einer fehlerhaften Signalübertragung einfacher Signale von der Steuereinheit an die Halteeinheit die Halteeinheit dazu veranlasst wird, Aufgaben der Steuereinheit zu übernehmen, so dass hierdurch ein Überwachen eines Soll-Zustandes durch die Steuereinheit unterdrückt würde. Stattdessen soll diese Aufgabenübertragung nur stattfinden, wenn von der Steuereinheit gezielt ein geeignet komplexes, zeitlich variierendes Signal an die Halteeinheit übermittelt wird, wobei ein solches Signal mit hoher Wahrscheinlichkeit nicht zufällig durch einen Fehler generiert werden kann.

Gemäß einer Ausführungsform weist die Halteeinheit einen Speicher zum Speichern elektrischer Energie auf. Die Steuereinheit und die Halteeinheit sind dabei dazu ausgestaltet, dass die Steuereinheit den Speicher der Halteeinheit mit elektrischer Energie auflädt und die Halteeinheit auf diese Weise veranlasst, nachfolgend maximal für die vorgegebene Haltedauer das Schließsignal zu erzeugen und an den mindestens einen Schalter anzulegen.

Mit anderen Worten kann die Halteeinheit durch Vorsehen eines entsprechenden Energiespeichers dazu in die Lage versetzt werden, eine gewisse Energiemenge elektrisch zu speichern. Diese Energiemenge kann geeignet gewählt sein, dass sie ausreicht, um z.B. eine als Schließsignal wirkende Schließspannung für die vorgegebene maximale Haltedauer an den zugeordneten Schalter anzulegen. Indem die Steuereinheit den Speicher der Halteeinheit mit elektrischer Energie auflädt, versetzt sie diese Halteeinheit nachfolgend in die Lage, die im Speicher gespeicherte elektrische Energie sukzessive abzugeben, indem die Schließspannung an den Schalter angelegt wird.

In einer konkreten Ausgestaltung kann der Speicher einen Kondensator, eine Spule oder einen Super-Cap aufweisen. Solche elektrischen Bauelemente können einfach aufgebaut sein und zuverlässig arbeiten. Außerdem können sie in einfacher Weise in einen Schaltkreis, in dem unter anderem auch die beiden Schalter und die Steuereinheit integriert sind, aufgenommen werden. Eine Kapazität des Kondensators bzw. des Super-Caps oder eine Induktivität der Spule können dabei geeignet gewählt sein, so dass in dem jeweiligen Speicher genügend elektrische Energie gespeichert werden kann, um während einer gewünschten Haltedauer z.B. die notwendige Schließspannung an dem zugeordneten Schalter anlegen zu können.

In der konkreten Auslegung der Halteeinheit mit einem elektrischen Energiespeicher können gemäß einer Ausführungsform die Steuereinheit und die Halteeinheit dazu ausgestaltet sein, dass die Steuereinheit den Speicher der Halteeinheit ausschließlich durch Anlegen eines elektrischen Wechselspannungssignals mit einer Frequenz innerhalb eines vorgegebenen Frequenzbandes mit elektrischer Energie aufladen kann und die Halteeinheit auf diese Weise veranlassen kann, nachfolgend maximal für die vorgegebene Haltedauer das Schließsignal zu erzeugen und an den zumindest einen Schalter zu leiten.

Mit anderen Worten kann die weiter oben beschriebene Ausführungsform, bei der die Steuereinheit die Halteeinheit ausschließlich durch Übermitteln eines vorbestimmten zeitlich variierenden Signals dazu veranlassen kann, z.B. eine Schließspannung zu generieren, dahingehend konkret implementiert werden, dass das zeitlich variierende Signal als Wechselspannungssignal mit einer bestimmten Frequenz erzeugt wird. Nur wenn die Steuereinheit das Signal mit einer solchen Wechselspannungsfrequenz innerhalb eines vorgegebenen Frequenzbandes erzeugt, kann sie hiermit den in der Halteeinheit vorgesehenen Speicher aufladen und somit in die Lage versetzen, nachfolgend die Schließspannung an dem zugeordneten Schalter zu erzeugen.

Zu diesem Zweck kann die Halteeinheit einen Frequenzfilter und einen Frequenz-Spannung-Wandler aufweisen. Der Frequenzfilter kann hierbei bewirken, dass ausschließlich ein elektrisches Wechselspannungssignal innerhalb eines beispielsweise durch physikalische Eigenschaften des Frequenzfilters vorgegebenen Frequenzbandes von der Steuereinheit, die dieses Signal erzeugt, bis hin zu dem Frequenz-Spannung-Wandler gelangen kann. Wechselspannungsfrequenzen außerhalb dieses Frequenzbandes werden von dem Frequenzfilter geblockt bzw. stark gedämpft. Wechselspannungssignale, die den Frequenzfilter passieren konnten, werden von dem Frequenz-Spannung-Wandler nachfolgend in eine Spannung umgewandelt, vorzugsweise eine Gleichspannung, mithilfe derer der in der Halteeinheit vorgesehene elektrische Energiespeicher aufgeladen werden kann.

Auf diese Weise kann sichergestellt werden, dass nur spezielle und von der Steuereinheit gezielt erzeugte Wechselspannungssignale dazu führen können, dass der in der Halteeinheit vorgesehene Speicher mit Energie geladen wird und die Halteeinheit somit nachfolgend die Funktion der Steuereinheit zum Anlegen des Schließsignals an den Schalter übernehmen kann. Ein Risiko von Fehlfunktionen des Sicherheitsschalters, insbesondere ein Risiko, dass die Halteeinheit unbeabsichtigt die Funktion der Steuereinheit zeitweilig übernimmt, kann hiermit minimiert werden.

Gemäß einer Ausführungsform weist der Sicherheitsschalter ferner eine zweite Halteeinheit auf, wobei jedem Schalter eine Halteeinheit zugeordnet ist, welche von der Steuereinheit dazu veranlasst werden kann, maximal für die vorgegebene Haltedauer das Schließsignal unabhängig von der Steuereinheit zu erzeugen und an den jeweils zugeordneten Schalter anzulegen.

Mit anderen Worten kann der Sicherheitsschalter nicht nur eine einzelne Halteeinheit, sondern mehrere Halteeinheiten aufweisen. Vorzugsweise entspricht eine Zahl der Halteeinheiten einer Zahl von in dem Sicherheitsschalter vorgesehenen Schaltern. Diese Zahl kann zwei sein, wodurch bereits meist ausreichende Sicherheitsredundanzen geschaffen werden können; die Zahl vorgesehener und in Reihe geschalteter Schalter und somit gegebenenfalls die Zahl jeweils zugeordneter Halteeinheiten kann jedoch auch größer als zwei sein, um Redundanzen weiter zu vergrößern und damit die Sicherheit des Sicherheitsschalters zu erhöhen. Jedem einzelnen Schalter kann hierbei vorzugsweise eine ihm zugeordnete eigene Halteeinheit vorgeschaltet sein, welche speziell dazu angepasst sein kann, den jeweiligen Schalter durch Anlegen einer Schließspannung in dem geschlossenen Zustand zu halten.

Insbesondere können sich die einzelnen Schalter beispielsweise technisch und/oder physikalisch unterscheiden, so dass sich die Schließsignale, die nötig sind, um einen jeweiligen Schalter im geschlossenen Zustand zu halten, unterscheiden können. Dadurch, dass verschiedene Schalter in dem Sicherheitsschalter in Serie geschaltet werden, kann eine Sicherheit des gesamten Sicherheitsschalters gegebenenfalls erhöht werden. Die jedem einzelnen Schalter zugeordnete Halteeinheit kann dabei an die physikalischen bzw. elektrischen Anforderungen des jeweiligen Schalters angepasst sein und beispielsweise die für ihn notwendige Schließspannung erzeugen.

Gemäß einer weiteren Ausführungsform weist der Sicherheitsschalter ergänzend eine zweite Steuereinheit auf, wobei jedem Schalter eine eigene Steuereinheit und eine eigene Halteeinheit zugeordnet sind und wobei die Halteeinheit von der zugehörigen Steuereinheit dazu veranlasst werden kann, maximal für eine vorgegebene Haltedauer das Schließsignal unabhängig von der Steuereinheit zu erzeugen und an den jeweiligen zugeordneten Schalter zu leiten.

Mit anderen Worten wird gemäß dieser Ausführungsform nicht lediglich eine einzige Steuereinheit vorgesehen, die mehrere Schalter sowie gegebenenfalls mehrere Halteeinheiten steuert. Stattdessen kann jedem Schalter eine eigene Steuereinheit zugeordnet sein, wodurch wiederum eine sicherheitserhöhende Redundanz implementiert werden kann. Außerdem können die verschiedenen Steuereinheiten physikalisch und/oder elektrisch unterschiedlich ausgestaltet sein, so dass eine Fehlerwahrscheinlichkeit für den Sicherheitsschalter insgesamt verringert werden kann.

Gemäß einem weiteren Aspekt der Erfindung wird ein Verfahren zum Betreiben eines Sicherheitsschalters, wie er vorangehend mit Bezugnahme auf den ersten Aspekt der Erfindung beschrieben wurde, vorgeschlagen. Das Verfahren weist folgende Schritte auf: Zunächst wird erkannt, dass ein Erzeugen des Schließsignals durch die Steuereinheit im Rahmen eines Resets oder Selbsttests kurzzeitig zu unterbrechen ist. Dann wird die Halteeinheit dazu veranlasst, maximal für eine vorgegebene Haltedauer das Schließsignal unabhängig von der Steuereinheit zu erzeugen und an den zumindest einen der Schalter zu leiten. Erst danach wird das Erzeugen des Schließsignals, welches zuvor von der Steuereinheit vorgenommen wurde, an den einen der Schalter im Rahmen des Resets oder Selbsttests unterbrochen.

Mit anderen Worten nutzt das vorgeschlagene Verfahren die in dem vorangehend beschriebenen Sicherheitsschalter geschaffene Möglichkeit, mithilfe der zusätzlich vorgesehenen Halteeinheit zeitweilig einen oder alle der darin vorgesehenen Schalter im geschlossenen Zustand zu halten.

Gemäß dem Verfahren erkennt der Sicherheitsschalter hierbei zunächst, dass seine Steuereinheit demnächst kurzzeitig nicht in der Lage sein wird, z.B. die zum Geschlossenhalten des Sicherheitsschalters notwendige Schließspannung selbst an dem zugehörigen Schalter zu erzeugen, da ein Reset oder Selbsttest durchgeführt werden muss. Um zu verhindern, dass der Sicherheitsschalter durch das fehlende Anlegen der Schließspannung durch die Steuereinheit ungewollt in einen geöffneten Zustand übergeht, wird die Halteeinheit dazu veranlasst, maximal für die vorgegebene Haltedauer die ansonsten durch die Steuereinheit durchzuführende Aufgabe des Anlegens der Schließspannung an den Schalter zu übernehmen. Ein solches Veranlassen kann vorzugsweise durch die Steuereinheit selbst erfolgen, beispielsweise, indem diese die Halteeinheit aktiviert, indem zum Beispiel ein in der Halteeinheit vorgesehener elektrischer Speicher mit Energie geladen wird. Erst wenn dies geschehen ist, wird der Steuereinheit erlaubt, den Reset oder Selbsttest durchzuführen und dabei das Anlegen der Schließspannung an den zugehörigen Schalter kurzzeitig zu unterbrechen.

Der hierin vorgeschlagene Sicherheitsschalter sowie das vorgeschlagene Verfahren zum Betreiben desselben können vorteilhaft in einer Sicherheitskette einer Aufzuganlage benutzt werden. Der Sicherheitsschalter kann dabei den hohen Anforderung an eine Sicherheit und eine Zuverlässigkeit eines Schaltvorgangs, wie sie in Sicherheitsketten für Aufzuganlagen vorausgesetzt werden, gerecht werden.

Es wird darauf hingewiesen, dass einige der möglichen Merkmale und Vorteile der Erfindung hierin mit Bezug auf unterschiedliche Ausführungsformen beschrieben sind. Insbesondere sind Merkmale zum Teil mit Bezug auf den Sicherheitsschalter und zum Teil mit Bezug auf ein Verfahren zum Betreiben desselben beschrieben. Ein Fachmann wird erkennen, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt einen herkömmlichen Halbleitersicherheitsschalter.
Fig. 2 zeigt eine Sicherheitskette für eine Aufzuganlage.
Fig. 3 zeigt einen Sicherheitsschalter gemäß einer Ausführungsform der vorliegenden Erfindung.
Fig. 4 zeigt einen Sicherheitsschalter gemäß einer weiteren Ausführungsform der vorliegenden Erfindung.
Fig. 5 zeigt einen Sicherheitsschalter gemäß einer weiteren alternativen Ausführungsform der vorliegenden Erfindung.
Fig. 6 zeigt eine Ausgestaltung einer Halteeinheit für einen Sicherheitsschalter gemäß einer Ausführungsform der vorliegenden Erfindung.

Die Figuren sind lediglich schematisch und nicht maßstabsgetreu. Gleiche Bezugszeichen bezeichnen in den verschiedenen Figuren gleiche oder gleichwirkende Merkmale.

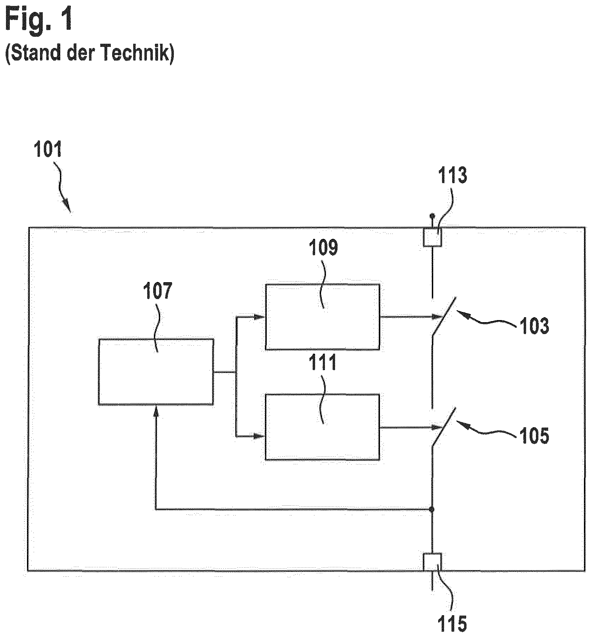

Fig. 1 zeigt einen Sicherheitsschalter 101, wie er aus der EP 2 326 006 A1 bekannt ist. Der Sicherheitsschalter 101 weist zwei Halbleiterschalter 103, 105 auf, welche miteinander in Serie verschaltet sind und welche zwischen einen Eingang 113 und einen Ausgang 115 geschaltet sind. Jeder der Halbleiterschalter 103, 105 ist mit einer ihm zugeordneten Ansteuereinheit 109, 111 verbunden. Die Ansteuereinheiten 109, 111 sind wiederum mit einer Steuereinheit 107 verbunden. Diese Steuereinheit 107 kann über die jeweils zugeordnete Ansteuereinheit 109 bzw. 111 jeden der beiden Halbleiterschalter 103, 105 dazu veranlassen, in seinen geschlossenen Zustand überzugehen. Lediglich für den Fall, dass beide Halbleiterschalter 103, 105 gleichzeitig in ihrem geschlossenen Zustand sind, ist der gesamte Sicherheitsschalter 101 in einem geschlossenen Zustand.

Der Sicherheitsschalter 101 kann in verschiedenen Varianten modifiziert werden, wie dies in EP 2 326 006 A1 beschrieben ist und hier nicht im Detail wiederholt werden soll. Beispielsweise können als Ansteuereinheiten 109, 111 spezielle Ansteuereinheiten mit einem optischen oder magnetischen Trennelement verwendet werden, um eine galvanische Trennung der Verbindung zwischen der Steuereinheit 107 und den Halbleiterschaltern 103, 105 zu erreichen. Ferner kann statt einer einzigen Steuereinheit 107 auch eine Mehrzahl von Steuereinheiten vorgesehen sein. Es ist einem Fachmann ersichtlich, dass viele der in der EP 2 326 006 A1 für den dortigen Sicherheitsschalter beschriebenen Merkmale in analoger Weise auf einen Sicherheitsschalter gemäß Ausführungsformen der hierein beschriebenen Erfindung übertragen werden können.

Sicherheitsschalter können für verschiedenste Zwecke in unterschiedlichsten Einsatzbereichen verwendet werden, beispielsweise bei Motorensteuerungen, Schaltschränken, Getriebesteuerungen, elektrischen Geräten, Industrieanlagen etc. In einem hier näher beschriebenen Beispiel können Sicherheitsschalter in Beförderungsmitteln wie Aufzügen oder Fahrtreppen eingesetzt werden. Da Sicherheitsschalter hohen Sicherheitskriterien genügen, können sie insbesondere in einer Sicherheitskette eines solchen Beförderungsmittels, das heißt insbesondere einer Aufzuganlage, verwendet werden.

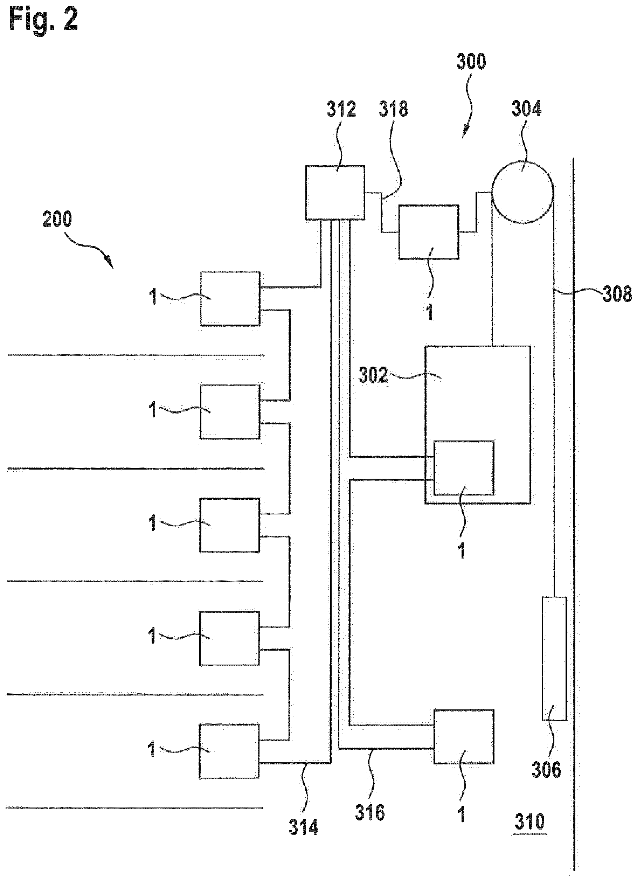

Fig. 2 zeigt schematisch ein Beispiel einer solchen Sicherheitskette 200 einer Aufzuganlage 300, in der erfindungsgemäße Sicherheitsschalter 1 eingesetzt werden können. In dem Beispiel ist eine sogenannte Treibscheibenaufzuganlage dargestellt. Selbstverständlich können erfindungsgemäße Sicherheitsschalter 1 auch in anderen Aufzugtypen oder allgemein auch in anderen Beförderungsmitteln für dortige Sicherheitsketten eingesetzt werden, wie zum Beispiel hydraulische Aufzüge, gegengewichtslose Aufzüge etc. In der Aufzuganlage 300 kann eine Aufzugskabine 302 mithilfe eines Motors 304 innerhalb eines Aufzugschachts 310 vertikal bewegt werden.

Die Aufzugskabine 302 ist dabei an einem Tragmittel 308 wie beispielsweise einem Seil oder einem Riemen befestigt. Das Tragmittel 308 kann von dem Motor 304 angetrieben werden. Am entgegengesetzten Ende des Tragmittels 308 ist ein Gegengewicht 306 befestigt. Die Komponenten der Aufzuganlage 300 werden mithilfe einer Aufzugsteuereinheit 312 gesteuert. Die Aufzugsteuereinheit 312 überwacht dabei unter anderem auch den bzw. die Sicherheitskreise 314, 316, 318 der Sicherheitskette 200, in denen Sicherheitsschalter 1 integriert sein können.

Ein Sicherheitskreis 314 kann hierbei beispielsweise alle Türen in den einzelnen von der Aufzuganlage 300 bedienten Stockwerken daraufhin überprüfen, dass sie korrekt geschlossen sind. An jeder Tür ist hierfür ein Sicherheitsschalter 1 vorgesehen, der ausschließlich dann geschlossen ist, wenn die Tür korrekt geschlossen wurde. Lediglich wenn alle der in Serie geschalteten Sicherheitsschalter 1 des Sicherheitskreises 314 geschlossen sind, erlaubt die Aufzugsteuereinheit 312, dass die Aufzugskabine 302 mithilfe des Motors 304 verfahren wird.

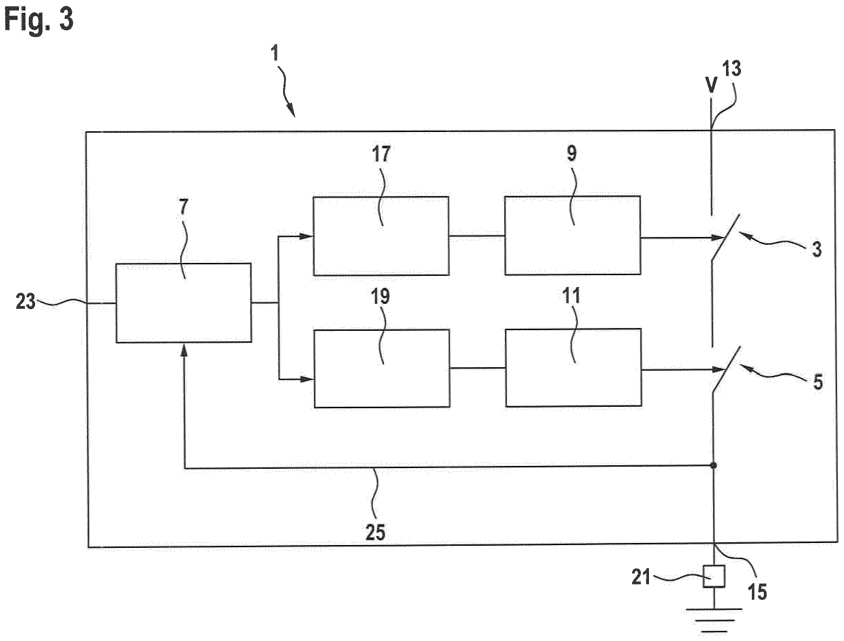

Fig. 3 zeigt einen Sicherheitsschalter 1 gemäß einer Ausführungsform der vorliegenden Erfindung.

Der Sicherheitsschalter 1 weist zwei Schalter 3, 5, vorzugsweise in Form von Halbleiterschaltern, auf. Die beiden Schalter 3, 5 sind miteinander in Serie verschaltet. Die Serienverschaltung der Schalter 3, 5 ist einerseits an einem Eingang 13 des Sicherheitsschalters 1 und andererseits an einem Ausgang 15 des Sicherheitsschalters 1 angeschlossen. An dem Eingang 13 und/oder an dem Ausgang 15 kann ein Schaltkreis mit einem externen Lastelement 21 angeschlossen sein, so dass die beiden Schalter 3, 5 sowohl miteinander als auch mit dem Lastelement 21 in Serie verschaltet sind. Jeder der Schalter 3, 5 ist wiederum mit einer jeweils zugehörigen Ansteuereinheit 9, 11 verbunden. Gegebenenfalls kann beispielsweise ein als Halbleiterschalter ausgebildeter Schalter 3, 5 zusammen mit der jeweiligen Ansteuereinheit 9, 11 einen gemeinsamen Schaltkreis bilden und somit als gemeinsames Bauelement implementiert sein.

Die beiden Schalter 3, 5 können jeweils bei Empfangen eines Schließsignals in einen geschlossenen Zustand übergehen bzw. in diesem gehalten werden. Das Schließsignal kann ein elektrisches Signal sein, beispielsweise in Form einer an den jeweiligen Schalter 3, 5 angelegten Spannung. Das Schließsignal kann vorbestimmte Eigenschaften aufweisen müssen, sodass ein Schalter 3, 5 ausschließlich dann in geschlossenen Zustand geht, wenn er ein solches Schließsignal erhält, nicht jedoch, wenn er kein oder ein anderes Signal erhält. Beispielsweise kann ein Schalter 3, 5 derart ausgestaltet sein, dass er ausschließlich dann, wenn er eine elektrische Spannung empfängt, die in einem vorgegebenen Spannungsbereich liegt, schließt, er jedoch, wenn er keine, eine zu niedrige oder eine zu hohe Spannung empfängt, öffnet.

Eine in dem Sicherheitsschalter 1 vorgesehene Steuereinheit 7 kann ein geeignetes Schließsignal erzeugen und an einen jeweiligen der Schalter 3, 5 bzw. an deren Ansteuereinheiten 9, 11 leiten. Das Schließsignal sollte hierbei im Wesentlichen kontinuierlich, das heißt ohne zeitliche Unterbrechungen, an dem jeweiligen Schalter 3, 5 bzw. dessen zugehöriger Ansteuereinheit 9, 11 anliegen, damit der jeweilige Schalter 3, 5 durchgehend im geschlossenen Zustand bleibt. Damit der gesamte Sicherheitsschalter 1 in einem geschlossenen Zustand bleibt, muss die Steuereinheit 7 hierzu kontinuierlich durch Erzeugen jeweiliger Schließsignale und Weiterleiten derselben an die Schalter 3, 5 bzw. deren Ansteuereinheiten 9, 11 bewirken, dass beide Schalter 3, 5 in einem geschlossenen Zustand bleiben.

Die Steuereinheit 7 kann hierzu ermitteln, ob ein Soll-Zustand, der ein Schließen des Sicherheitsschalters 1 rechtfertigt, vorliegt. Das Vorliegen eines solchen Soll-Zustandes kann von der Existenz bzw. Korrektheit oder dem Fehlen entsprechender Signale, die der Steuereinheit 7 beispielsweise über einen Anschluss 23 von Sensoren, Aktuatoren etc. des zu überwachenden Systems bereitgestellt werden, abhängig gemacht werden.

Im Beispiel der eingangs genannten Sicherheitskette der Aufzuganlage kann der Anschluss 23 beispielsweise mit Sensoren verbunden sein, die zuverlässig feststellen können, ob eine Aufzugtüre geschlossen ist. In diesem Beispiel wäre der Soll-Zustand ein korrekt geschlossener Zustand der Aufzugtüre und könnte über ein entsprechendes Sensorsignal an dem Anschluss 23 von der Steuereinheit 7 ermittelt werden. Ausschließlich wenn das Vorliegen eines solchen Soll-Zustandes von der Steuereinheit 7 ermittelt wird, erzeugt diese das Schließsignal und übermittelt dieses direkt oder indirekt bis hin zu den Schaltern 3, 5, welche daraufhin in ihren geschlossenen Zustand gehen bzw. in diesem bleiben. Sollte die Steuereinheit 7 erkennen, dass kein Soll-Zustand vorliegt, das heißt, dass ein Nicht-Soll-Zustand vorliegt, wird kein entsprechendes Schließsignal erzeugt und an beide Schalter 3, 5 weitergeleitet, sondern stattdessen wird zumindest an einen der Schalter 3, 5 kein Schließsignal geleitet, woraufhin dieser Schalter 3, 5 öffnet und damit den gesamten Sicherheitsschalter 1 öffnet.

In dem dargestellten Sicherheitsschalter 1 sind zusätzlich zwei Halteeinheiten 17, 19 vorgesehen. Diese Halteeinheiten 17, 19 sind zwischen die Steuereinheit 7 einerseits und die Schalter 3, 5 zusammen mit den ihnen zugeordneten Ansteuereinheiten 9, 11 andererseits zwischengeschaltet.

Wie weiter unten anhand eines konkreten Beispiels näher erläutert, ist jede der Halteeinheiten 17, 19 dazu ausgestaltet, ein Schließsignal unabhängig von der Steuereinheit 7 zu erzeugen und an einen zugehörigen Schalter 3, 5 bzw. die zugeordnete Ansteuereinheit 9, 11 zu leiten, um den Schalter 3, 5 im geschlossenen Zustand zu halten.

Allerdings sind die Halteeinheiten 17, 19 lediglich in der Lage, ein solches Schließsignal während einer maximalen Haltedauer von beispielsweise wenigen Millisekunden selbstständig zu erzeugen. Nach Ablauf dieser Haltedauer beendet die Halteeinheit 17, 19 das Erzeugen des Schließsignals, wodurch der mit dem Schließsignal versorgte Schalter 3, 5 in seinen geöffneten Zustand übergeht, sofern ein entsprechendes Schließsignal zu diesem Zeitpunkt nicht schon wieder von der Steuereinheit 7 erzeugt und an den Schalter 3, 5 geleitet wird.

Außerdem muss die Halteeinheit 17, 19 von der Steuereinheit 7 speziell dazu veranlasst werden, das Schließsignal während der Haltedauer zu erzeugen. Mit anderen Worten soll die Halteeinheit 17, 19 nicht in der Lage sein, selbstständig das Schließsignal zu erzeugen, ohne hierzu zuvor von der Steuereinheit 7 beispielsweise durch Übermitteln eines hierfür vorgesehenen Signals instruiert worden zu sein.

Beispielsweise kann die Steuereinheit 7 mit einem Prozessor ausgestattet sein, der in regelmäßigen Zeitintervallen oder bei Vorliegen eines von außen angelegten Triggersignals einen Selbsttest oder einen Reset durchführt und dadurch kurzzeitig nicht in der Lage sein kann, das Schließsignal selbst zu erzeugen. In einem solchen Fall kann die Steuereinheit 7 eine oder beide der Halteeinheiten 17, 19 dazu veranlassen, für die vorgegebene maximale Haltedauer das Schließsignal zu erzeugen und somit quasi stellvertretend für die Steueranlage 7 das erzeugte Schließsignal zum Schließen des jeweiligen Schalters 3, 5 zu erzeugen und weiterzuleiten. Nachdem die Steuereinheit 7 den Selbsttest bzw. den Reset erfolgreich abgeschlossen hat, kann sie diese Aufgabe selbst wieder übernehmen, d.h. selbst das Schließsignal erzeugen und zum Schließen der Schalter 3, 5 weiterleiten.

Sofern die Haltedauer, während der die jeweiligen Halteeinheiten 17, 19 das Schließsignal erzeugen und weiterleiten, länger ist als die Zeitdauer, innerhalb derer die Steuereinheit 7 während des Selbsttests bzw. Resets selbst nicht in der Lage ist, dieses Schließsignal zu erzeugen, können die Schalter 3, 5 und damit der gesamte Sicherheitsschalter 1 mithilfe der Halteeinheiten 17, 19 auch in solchen Zeiträumen kontinuierlich geschlossen gehalten werden.

Ein Feedback, das angibt, ob der Sicherheitsschalter 1 geschlossen oder offen ist, kann beispielsweise über eine entsprechende Leitung 25 an die Steuerung 7 geleitet werden. Die Leitung 25 steht hierzu in Verbindung mit der Serienschaltung der Schalter 3, 5 und des Lastelements 21.

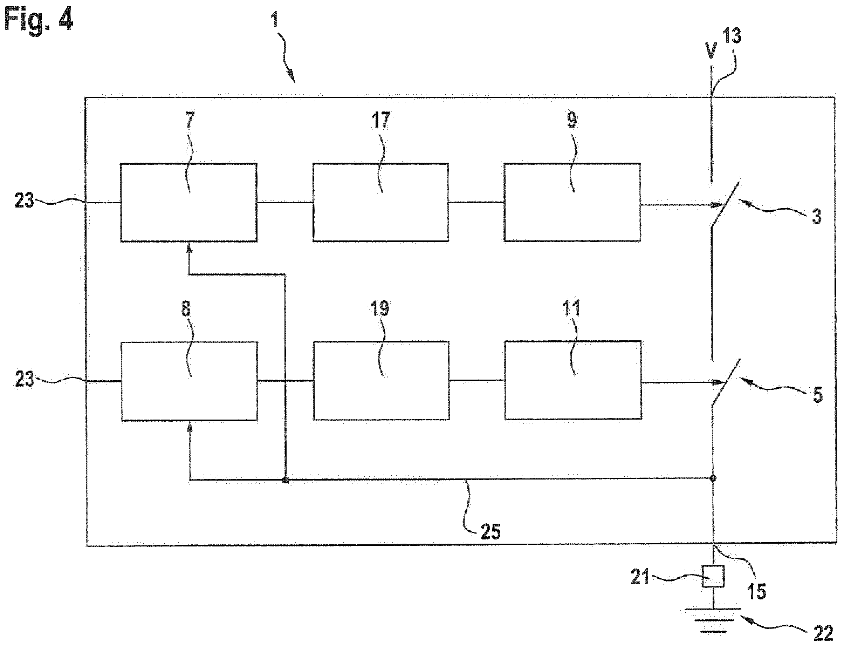

Bei der in Fig. 4 dargestellten alternativen Ausführungsform eines Sicherheitsschalters 1 sind statt einer einzelnen Steuereinheit 7 zwei separate Steuereinheiten 7, 8 vorgesehen. Jede der Steuereinheiten 7, 8 soll den Schließzustand eines jeweils zugeordneten Schalters 3, 5 steuern und zu diesem Zweck gegebenenfalls ein Schließsignal erzeugen und weiterleiten. Jedem Schalter 3, 5 ist somit eine Ansteuereinheit 9, 11, eine Halteeinheit 17, 19 sowie eine jeweils zugehörige Steuereinheit 7, 8 zugeordnet. Die einem der Schalter 3, 5 zugeordneten Ansteuereinheiten 9, 11, Halteeinheiten 17, 19 bzw. Steuereinheiten 7, 8 können sich dabei jeweils voneinander unterscheiden, beispielsweise hinsichtlich ihrer technischen Ausgestaltung oder der genutzten physikalischen Effekte, so dass für den Sicherheitsschalter 1 eine weiter gesteigerte Redundanz und damit eine Erhöhung der Sicherheit beim Durchführen von Schaltvorgängen erreicht werden kann.

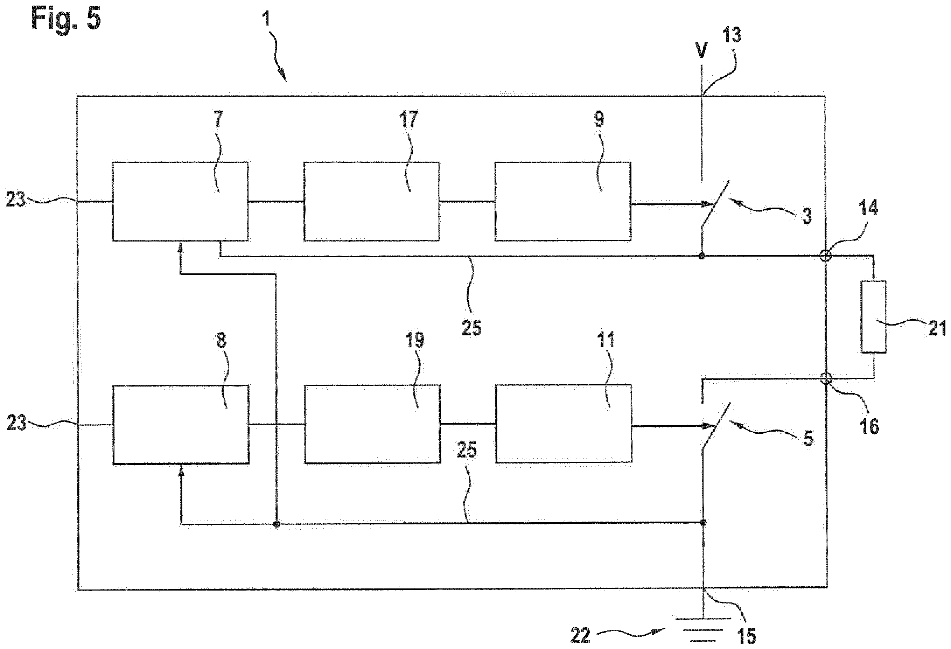

Fig. 5 zeigt eine weitere alternative Ausführungsform eines Sicherheitsschalters 1. Diese Ausführungsform unterscheidet sich von der in Fig. 4 dargestellten Ausführungsform im Wesentlichen lediglich dadurch, dass eine Ausgangsstufe des Sicherheitsschalters 1 anders gestaltet ist. Bei der in Fig. 4 dargestellten Ausführungsform ist ein Lastelement 21 zwischen dem Ausgang 15 und einer Erdung 22 bzw. einer Masse oder einem GND des zu überwachenden externen Schaltkreises angeschlossen. Bei der in Fig. 5 dargestellten Ausführungsform hingegen ist das Lastelement 21 in Serie zwischen die beiden Schalter 3, 5 des Sicherheitsschalters 1 zwischengeschaltet. Der Sicherheitsschalter 1 verfügt hierzu über zusätzliche externe Anschlüsse 14, 16, an die das externe Lastelement 21 derart angeschlossen werden kann, dass das Lastelement 21 zusammen mit den Schaltern 3, 5 in einer Serienschaltung verschaltet ist.

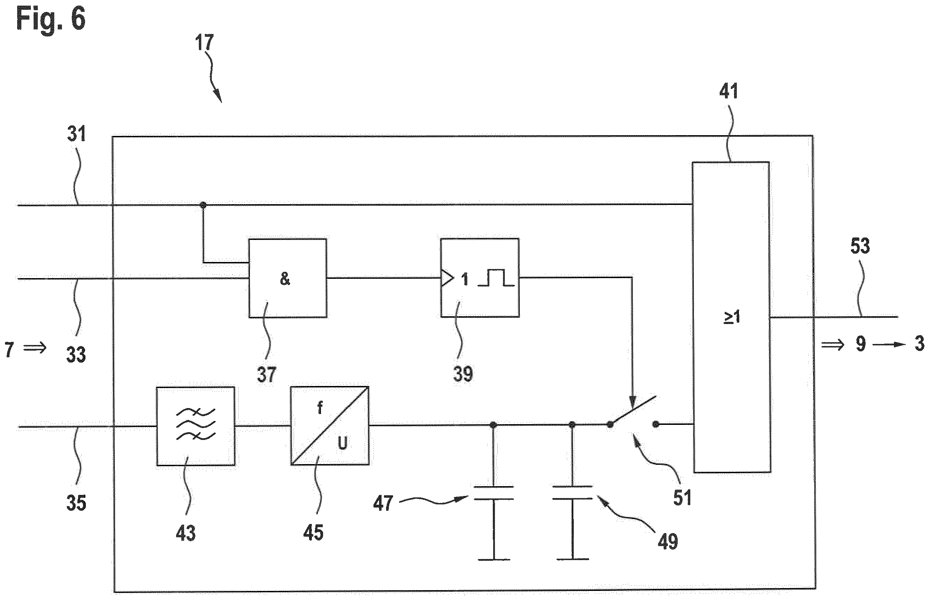

Fig. 6 zeigt ein Beispiel einer Halteeinheit 17, wie sie in einem erfindungsgemäßen Sicherheitsschalter 1 verwendet werden kann.

Die Halteeinheit 17 weist drei Eingangsanschlüsse 31, 33, 35 sowie einen Ausgangsanschluss 53 auf. Die Eingangsanschlüsse 31, 33, 35 können mit einer zugeordneten Steuereinheit 7 verbunden sein, der Ausgangsanschluss 53 kann mit einem der Schalter 3, 5 bzw. zugeordneten Ansteuereinheiten 9, 11 verbunden sein.

Ein erster Eingangsanschluss 31 soll dazu dienen, dass die Steuereinheit 7 ein von ihr erzeugtes Schließsignal im regulären Betrieb direkt an einen Schalter 3, 5 bzw. eine Ansteuereinheit 9, 11 weiterleiten kann. Der Eingangsanschluss 31 ist hierfür mit einem in der Halteeinheit 17 vorgesehenen Oder-Gatter 41 verbunden. Für den Fall, dass die Steuereinheit das Vorliegen eines Normalzustandes eines von ihr überwachten Parameters erkennt, kann sie ein Schließsignal beispielsweise in Form einer elektrischen Schließspannung erzeugen, welches z.B. eine logische "1" angeben soll. Dieses Schließsignal wird über das Oder-Gatter 41 an den Ausgangsanschluss 53 weitergeleitet und erreicht somit letztendlich den Schalter 3, 5, der daraufhin in seinen geschlossenen Zustand geht. Der erste Eingangsanschluss 31 wird auch als "Enable Output"-Eingang bezeichnet.

Ein zweiter Eingangsanschluss 33 kann als "Enable Bridging"-Anschluss bezeichnet werden. Über ihn kann eine Überbrückung aktiv geschaltet werden. Das heißt, sobald an dem zweiten Eingangsanschluss 33 ein Signal beispielsweise in Form einer logischen "1" anliegt, kann der Halteeinheit 17 auf diese Weise signalisiert werden, dass sie für einen bestimmten Zeitraum einer maximalen Haltedauer selbst dafür zuständig sein soll, das Schließsignal zu erzeugen und an den Schalter 3, 5 bzw. die Ansteuereinheit 9, 11 zu leiten.

Hierzu ist in der Halteeinheit 17 ein Und-Gatter 37 vorgesehen, dessen erster Eingang mit dem ersten Eingangsanschluss 31 verbunden ist und dessen zweiter Eingang mit dem zweiten Eingangsanschluss 33 verbunden ist. Am Ausgang des Und-Gatters 37 liegt somit lediglich dann eine logische "1" an, wenn einerseits ein eine "1" signalisierendes Signal am ersten Eingangsanschluss 31 anliegt und somit der zugehörige Schalter 3, 5 eingeschaltet ist, und wenn andererseits am zweiten Eingangsanschluss 33 ein eine "1" angebendes Signal signalisiert, dass die Überbrückung aktiv geschaltet sein soll.

Dem Und-Gatter 37 nachgeschaltet und an dessen Ausgang angeschlossen ist ein Monoflop 39, der dafür sorgt, dass ein am Ausgang des Und-Gatters 37 ausgegebenes Signal lediglich für eine begrenzte Zeit, nämlich für die maximale Haltedauer, weitergeleitet wird. Ein Monoflop, welcher teilweise auch als monostabile Kippstufe bezeichnet wird, ist eine elektronische oder elektromechanische Schaltung, die nur einen stabilen Zustand hat, wovon sich der Begriff monostabil ableitet. Durch einen äußeren Impuls angesteuert, ändert der Monoflop 39 für eine durch seine Dimensionierung bestimmte Zeitdauer seinen Schaltzustand, bis er wieder von selbst in seinen stabilen Ruhezustand zurückkehrt. Der Ausgang des Monoflops 39 ist mit einem Schalter, der nachfolgend als Überbrückungsschalter 51 bezeichnet wird, verbunden, um diesen zu öffnen bzw. zu schließen.

Ein dritter Eingangsanschluss 35, der auch als "Fill up"-Eingang bezeichnet wird, dient dazu, einen in der Halteeinheit 17 vorgesehenen Energiespeicher 47, 49 gegebenenfalls mit elektrischer Energie aufzuladen. Zum Zwecke eines solchen Aufladens kann die Steuereinheit 7 ein Signal, z.B. ein geeignet zeitlich variierendes Signal beispielsweise in Form eines elektrischen Wechselspannungssignals an den dritten Eingangsanschluss 35 anlegen. Der dritte Eingangsanschluss 35 ist mit einem Frequenzfilter 43 verbunden, der lediglich Frequenzen innerhalb eines vorbestimmten Frequenzbandes passieren lässt. Auf diese Weise kann ein Risiko, dass der Energiespeicher 47, 49 der Halteeinheit 17 versehentlich geladen wird, minimiert werden. Der Frequenzfilter 43 ist mit seinem Ausgang mit einem Frequenz-Spannung-Wandler 45 verbunden, der passierende Frequenzen in eine elektrische Spannung umwandelt. Ein Ausgang des Frequenz-Spannung-Wandlers 45 ist mit einem oder mehreren elektrischen Energiespeichern 47, 49 verbunden, so dass die dort anliegende Spannung zu einem Aufladen dieser Energiespeicher 47, 49 führt. Im dargestellten Beispiel sind die Energiespeicher 47, 49 als Kondensatoren ausgebildet, können jedoch alternativ auch als andere elektrische Energiespeicher wie beispielsweise Induktivitäten oder Super-Caps ausgebildet sein.

Sofern die Energiespeicher 47, 49 vorab mit elektrischer Energie aufgeladen wurden, kann die Steuereinheit 7, wenn sie z.B. erkennt, dass demnächst ein Selbsttest oder Reset durchgeführt werden soll, über den zweiten Eingangsanschluss 33 ein "Enable Bridging" signalisieren und damit begrenzt auf die von dem Monoflop 39 determinierte Haltedauer ein Schließen des Überbriickungsschalters 51 bewirken. Hierbei kann es eine Voraussetzung sein, dass die Schalter 3 und 5 geschlossen sind, da ansonsten das Monoflop 39 nicht gestartet werden kann. Da ein Eingang des Überbrückungsschalters 51 mit den Energiespeichern 47, 49 verbunden ist und ein Ausgang des Überbrückungsschalters 51 mit dem Oder-Gatter 41 verbunden ist, kann die in den Energiespeichern 47, 49 gespeicherte elektrische Energie als Schließsignal zu dem Oder-Gatter 41 gelangen und von diesem aus weiter an die Schalter 3, 5 bzw. die Ansteuereinheiten 9, 11 geleitet werden.

Auf diese Weise kann die Halteeinheit 17 zumindest zeitweilig dafür sorgen, dass die Schalter 3, 5 und damit der gesamte Sicherheitsschalter 1 auch dann in einem geschlossenen Zustand verbleibt, wenn kurzzeitig kein Schließsignal von der Steuereinheit 7 erzeugt und an die Schalter 3, 5 weitergeleitet werden kann,

Die Halteeinheit 17 kann, falls erforderlich, durch die Steuereinheit 7 im regulären Betrieb getestet werden. Es kann erforderlich sein, dies sporadisch durchzuführen, um beispielsweise Bauteildefekte aufdecken zu können. Im Rahmen eines solchen Tests wird beispielsweise bei aktiviertem "Enable Output", das heißt Anlegen eines Signals an dem ersten Eingangsanschluss 31, ein "Fill up" dynamisch bedient, das heißt, ein Signal geeigneter Frequenz an den dritten Eingangsanschluss 35 angelegt. Daraufhin wird der Energiespeicher 47, 49 aufgeladen. Anschließend wird "Enable Bridging" aktiviert, das heißt ein entsprechendes Signal an den zweiten Eingangsanschluss 33 angelegt. Unmittelbar davor oder danach wird "Enable Output" deaktiviert. Über die Feedback-Leitung 25 kann dann überprüft werden, ob sich der zugehörige Schalter 3, 5 und damit der gesamte Sicherheitsschalter 1 nach der vorgegebenen Haltedauer regelgerecht öffnet. Falls dies nicht der Fall sein sollte, kann dies als Indikator dafür dienen, dass ein Defekt in dem Sicherheitsschalter 1, insbesondere in dessen Halteeinheit 17, existiert. Ein solcher Fehler oder Defekt kann rapportiert werden und gegebenenfalls kann die Steuereinheit 7 über den zweiten Abschaltpfad, das heißt über die zweite Halteeinheit 19 und die zugehörige Ansteuereinheit 11, den zweiten Schalter 5 öffnen und auf diese Weise den Sicherheitsschalter 1 öffnen.

Ein solcher Test lässt sich selbstverständlich für jede der in dem Sicherheitsschalter 1 aufgenommenen Halteeinheiten 17, 19 durchführen.

Zusammenfassend wird gemäß Ausführungsformen der hierin beschriebenen Erfindung ein vorzugsweise elektronischer Sicherheitsschalter 1 beschrieben, der in dem Sinne dauerhaft in Betrieb sein kann, dass er zuverlässig dauerhaft geschlossen gehalten werden kann. In dem Sicherheitsschalter 1 kann eine oder mehrere Steuereinheiten 7 vorgesehen sein, die ein Schließen mehrerer in Serie geschalteter Schalter 3, 5 durch Erzeugen und Weiterleiten geeigneter Schließsignale bewirken können. Allerdings wurde erkannt, dass insbesondere spezielle Prozessoren, wie sie für sicherheitskritische Anwendungen eingesetzt werden, von Zeit zu Zeit neu gestartet oder gewissen Selbsttests unterzogen werden sollten, um ihre einwandfreie Funktionalität zu prüfen. Bei herkömmlichen Sicherheitsschaltern 101 würde dies unweigerlich zu einem Öffnen des Sicherheitsschalters 101 führen. Je nach damit angesteuertem Aktor kann hierdurch beispielsweise eine Blockierung eines Aufzugs die Folge sein, was zum Beispiel eine Entsperrung durch einen Servicemitarbeiter notwendig machen würde. Es wird daher vorgeschlagen, in dem Sicherheitsschalter 1 eine oder mehrere Halteeinheiten 17, 19 vorzusehen, die für die Dauer eines Resets oder Selbsttests der Steuereinheit 7 den Sicherheitsschalter 1 auf sichere Art und Weise und für eine zeitlich begrenzte Haltedauer autonom, das heißt ohne kontinuierliches Mitwirken der Steuereinheit 7, geschlossen halten kann.

Für den Fall, dass die Steuereinheit 7 ihren regulären Betrieb kurzzeitig aussetzen muss, beispielsweise im Rahmen eines Resets oder Selbsttests, kann wie folgt vorgegangen werden: Zunächst kann die Steuereinheit 7 die Halteeinheiten 17, 19 dahingehend aktivieren, dass beispielsweise ein Energiespeicher 47, 49 in einer Halteeinheit 17, 19 mit elektrischer Energie geladen wird. Die Halteeinheit 17, 19 wird hierdurch aktiv und kann den ihr zugeordneten Schalter 3, 5 und damit geeigneterweise den gesamten Sicherheitsschalter 1 unabhängig von der Steuereinheit 7 für eine begrenzte Zeit, das heißt die Haltedauer, geschlossen halten. Innerhalb dieser Haltedauer kann die jeweilige Steuereinheit 7 zurückgesetzt bzw. selbstgetestet werden und dabei ein Anlegen der Schließspannung von Seiten der Steuereinheit 7 kurzzeitig unterbrochen werden. Sobald die Steuereinheit 7 nach dem Reset oder Selbsttest wieder regulär betriebsfähig ist, wird die Halteeinheit 17, 19 deaktiviert und die Steuereinheit 7 übernimmt wieder die Kontrolle. Dauert der Reset bzw. Selbsttest jedoch zu lange oder findet die Steuereinheit 7 nicht in einen Normalbetrieb zurück, kommt es zu einer sicheren Abschaltung des Sicherheitsschalters 1, da die Halteeinheit 17, 19 nach Ablauf der maximalen Haltedauer kein Schließsignal mehr an den zugeordneten Schalter 3, 5 sendet und dieser somit öffnet.

Die hierin beschriebene Ausgestaltung einer Halteeinheit 17, 19, wie sie am Beispiel von Fig. 6 beschrieben wurde, ist lediglich als ein möglicher Vorschlag zu verstehen. Andere Varianten, bei denen beispielsweise kein Frequenzfilter 43, kein Frequenz-Spannung-Wandler 45, oder Ähnliches vorgesehen sind und/oder die beispielsweise mit Signalen in Form von Impulsen oder mittels Spannungsrampen oder Stromrampen gesteuert werden, sind vorstellbar.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Sicherheitsschalter
- 3: Schalter
- 5: Schalter
- 7: Steuereinheit
- 9: Ansteuereinheit
- 11: Ansteuereinheit
- 13: Eingang
- 14: externer Anschluss
- 15: Ausgang
- 16: externer Anschluss
- 17: Halteeinheit
- 19: Halteeinheit
- 21: Lastelement
- 22: Erdung
- 23: Anschluss für Sensoren
- 25: Feedback-Leitung
- 31: erster Eingangsanschluss
- 33: zweiter Eingangsanschluss
- 35: dritter Eingangsanschluss
- 37: Und-Gatter
- 39: Monoflop
- 41: Oder-Gatter
- 43: Frequenzfilter
- 45: Frequenz-Spannung-Wandler
- 47: Kondensator
- 49: Kondensator
- 51: Überbrückungsschalter
- 53: Ausgangsanschluss
- 101: Sicherheitsschalter
- 103: Schalter
- 105: Schalter
- 107: Steuereinheit
- 109: Ansteuereinheit
- 111: Ansteuereinheit
- 113: Eingang
- 115: Ausgang
- 200: Sicherheitskette
- 300: Aufzuganlage
- 302: Aufzugskabine
- 304: Motor
- 306: Gegengewicht
- 308: Tragmittel
- 310: Aufzugschacht
- 312: Aufzugsteuereinheit
- 314: Sicherheitskreis
- 316: Sicherheitskreis
- 318: Sicherheitskreis

## Patentansprüche

1. Sicherheitsschalter (1) für eine elektrische Anlage, insbesondere für eine Sicherheitskette (200) einer Aufzuganlage (300), aufweisend:
zwei Schalter (3, 5), welche miteinander und mit einem zu schaltenden Lastelement (21) in Serie geschaltet sind, wobei jeder der Schalter (3, 5) dazu ausgestaltet ist, dass er durch Empfangen eines Schließsignals in einem geschlossenen Zustand gehalten wird und bei Fehlen des Schließsignals in einen geöffneten Zustand übergeht;
eine Steuereinheit (7), welche dazu ausgestaltet ist, bei Vorliegen eines Soll-Zustandes das Schließsignal zu erzeugen und an zumindest einen der Schalter (3, 5) leiten und bei Vorliegen eines Nicht-Soll-Zustandes kein Schließsignal an den zumindest einen Schalter (3, 5) zu leiten; **dadurch gekennzeichnet, dass** eine Halteeinheit (17, 19), welche von der Steuereinheit (7) dazu veranlasst werden kann, maximal für eine vorgegebene Haltedauer das Schließsignals unabhängig von der Steuereinheit (7) zu erzeugen und an den zumindest einen der Schalter (3, 5) zu leiten, und dass
die Steuereinheit (7) dazu ausgestaltet ist, die Halteeinheit (17, 19) vor einem von der Steuereinheit (7) durchzuführenden Reset oder Selbsttest zu veranlassen, maximal für die vorgegebene Haltedauer das Schließsignal zu erzeugen und an den zumindest einen Schalter (3, 5) zu leiten.

2. Sicherheitsschalter nach Anspruch 1, wobei die Steuereinheit (7) dazu ausgestaltet ist, in regelmäßigen Zeitintervallen oder bei Vorliegen eines von außen anliegenden Triggersignals das Erzeugen des Schließsignals im Rahmen eines Resets oder Selbsttests kurzzeitig zu unterbrechen und zuvor die Halteeinheit (17, 19) dazu zu veranlassen, maximal für die vorgegebene Haltedauer das Schließsignal unabhängig von der Steuereinheit (7) zu erzeugen und an den zumindest einen der Schalter (3, 5) zu leiten.

3. Sicherheitsschalter nach Anspruch 2, wobei eine Zeitdauer zum Durchführen des Resets oder Selbsttests kürzer ist als die Haltedauer.

4. Sicherheitsschalter nach einem der Ansprüche 1 bis 3, wobei die Haltedauer zwischen 1µs und 100ms, vorzugsweise zwischen 1ms und 20ms, liegt.

5. Sicherheitsschalter nach einem der Ansprüche 1 bis 4, wobei die Steuereinheit (7) und die Halteeinheit (17, 19) dazu ausgestaltet sind, dass die Steuereinheit (7) die Halteeinheit (17, 19) ausschließlich durch Übermitteln eines vorbestimmten zeitlich variierenden Signals dazu veranlassen kann, nachfolgend maximal für die vorgegebene Haltedauer das Schließsignal zu erzeugen und an den zumindest einen Schalter (3, 5) zu leiten.

6. Sicherheitsschalter nach einem der Ansprüche 1 bis 5, wobei die Halteeinheit (17, 19) einen Speicher (47, 49) zum Speichern elektrischer Energie aufweist und wobei die Steuereinheit (7) und die Halteeinheit (17, 19) dazu ausgestaltet sind, dass die Steuereinheit (7) den Speicher (47, 49) der Halteeinheit (17, 19) mit elektrischer Energie auflädt und die Halteeinheit (17, 19) auf diese Weise veranlasst, nachfolgend maximal für die vorgegebene Haltedauer das Schließsignal zu erzeugen und an den zumindest einen Schalter (3, 5) zu leiten.

7. Sicherheitsschalter nach Anspruch 6, wobei der Speicher (47, 49) einen Kondensator, eine Spule oder einen Super-Cap aufweist.

8. Sicherheitsschalter nach einem der Ansprüche 6 oder 7, wobei die Steuereinheit (7) und die Halteeinheit (17, 19) dazu ausgestaltet sind, dass die Steuereinheit (7) den Speicher (47, 49) der Halteeinheit (17, 19) ausschließlich durch Anlegen eines elektrischen Wechselspannungssignals mit einer Frequenz innerhalb eines vorgegebenen Frequenzbandes mit elektrischer Energie aufladen kann und die Halteeinheit (17, 19) auf diese Weise veranlasst, nachfolgend maximal für die vorgegebene Haltedauer das Schließsignal zu erzeugen und an den zumindest einen Schalter (3, 5) zu leiten.

9. Sicherheitsschalter nach Anspruch 8, wobei die Halteeinheit (17, 19) einen Frequenzfilter (43) und einen Frequenz-Spannung-Wandler (45) aufweist.

10. Sicherheitsschalter nach einem der Ansprüche 1 bis 9, ferner aufweisend eine zweite Halteeinheit (19, 17), wobei jedem Schalter (3, 5) eine Halteeinheit (17, 19) zugeordnet ist, welche von der Steuereinheit (9) dazu veranlasst werden kann, maximal für eine vorgegebene Haltedauer das Schließsignal zu erzeugen und unabhängig von der Steuereinheit (7) an den jeweils zugeordneten Schalter (3, 5) zu leiten.

11. Sicherheitsschalter nach einem der Ansprüche 1 bis 10, ferner aufweisend eine zweite Steuereinheit (8), wobei jedem Schalter (3, 5) eine Steuereinheit (7, 8) und eine Halteeinheit (17, 19) zugeordnet sind, wobei die Halteeinheit (17, 19) von der zugehörigen Steuereinheit (7, 8) dazu veranlasst werden kann, maximal für eine vorgegebene Haltedauer das Schließsignal zu erzeugen und unabhängig von der Steuereinheit (7, 8) an den jeweils zugeordneten Schalter (3, 5) zu leiten.

12. Verfahren zum Betreiben eines Sicherheitsschalters (1) gemäß einem der Ansprüche 1 bis 11, aufweisend:
Erkennen, das ein Erzeugen des Schließsignals durch die Steuereinheit (7) im Rahmen eines Resets oder Selbsttests kurzzeitig zu unterbrechen ist,
Veranlassen der Halteeinheit (17, 19) dazu, maximal für eine vorgegebene Haltedauer das Schließsignal zu erzeugen und unabhängig von der Steuereinheit (7) an den zumindest einen der Schalter (3, 5) zu leiten;
Unterbrechen des Erzeugens des Schließsignals durch die Steuereinheit (7) im Rahmen des Resets oder Selbsttests.

13. Sicherheitskette (200) eines Beförderungsmittels, insbesondere einer Aufzuganlage (300), aufweisend wenigstens einen Sicherheitsschalter (1) gemäß einem der Ansprüche 1 bis 11.

14. Aufzugsanlage, aufweisend zumindest einem Sicherheitsschalter nach einem der Ansprüche 1 bis 11 und/oder einer Sicherheitskette nach Anspruch 13.

## Claims

1. Safety switch (1) for an electrical system, in particular for a safety chain (200) of an elevator system (300), comprising:
two switches (3, 5) which are connected in series with one another and with a load element (21) to be switched, each of the switches (3, 5) being configured such that it is held in a closed state on account of receiving a closing signal, and transfers into an open state when there is no closing signal;
a control unit (7) which is configured to generate the closing signal and forward it to at least one of the switches (3, 5) when a target state prevails, and which does not forward a closing signal to the at least one switch (3, 5) when a non-target state prevails;
**characterized in that** a holding unit (17, 19) which can be prompted by the control unit (7) to generate the closing signal independently of the control unit (7) at most for a predetermined holding period and to forward it to the at least one of the switches (3, 5), and **in that** the control unit (7) is configured to prompt the holding unit (17, 19), before a reset or self-test to be performed by the control unit (7), to generate the closing signal at most for the predetermined holding period and to forward it to the at least one switch (3, 5).

2. Safety switch according to claim 1, wherein the control unit (7) is configured to briefly interrupt the generation of the closing signal as part of a reset or self-test at regular time intervals or in the presence of an externally applied trigger signal and, beforehand, to prompt the holding unit (17, 19) to generate the closing signal independently of the control unit (7) at most for the predetermined holding period and to forward it to the at least one of the switches (3, 5).

3. Safety switch according to claim 2, wherein a time period for performing the reset or self-test is shorter than the holding period.

4. Safety switch according to any of claims 1 to 3, wherein the holding period is between 1 µs and 100 ms, preferably between 1 ms and 20 ms.

5. Safety switch according to any of claims 1 to 4, wherein the control unit (7) and the holding unit (17, 19) are configured such that the control unit (7) can prompt the holding unit (17, 19), exclusively by transmitting a predetermined signal that varies in time, to subsequently generate the closing signal at most for the predetermined holding period and to forward it to the at least one switch (3, 5).

6. Safety switch according to any of claims 1 to 5, wherein the holding unit (17, 19) comprises a storage means (47, 49) for storing electrical energy and wherein the control unit (7) and the holding unit (17, 19) are configured such that the control unit (7) charges the storage means (47, 49) of the holding unit (17, 19) with electrical energy and thus prompts the holding unit (17, 19) to subsequently generate the closing signal at most for the predetermined holding period and to forward it to the at least one switch (3, 5).

7. Safety switch according to claim 6, wherein the storage means (47, 49) comprises a capacitor, a coil or a supercap.

8. Safety switch according to either claim 6 or claim 7, wherein the control unit (7) and the holding unit (17, 19) are configured such that the control unit (7) can charge the storage means (47, 49) of the holding unit (17, 19) with electrical energy exclusively by applying an electrical alternating voltage signal at a frequency within a predetermined frequency band and thus prompts the holding unit (17, 19) to subsequently generate the closing signal at most for the predetermined holding period and to forward it to the at least one switch (3, 5).

9. Safety switch according to claim 8, wherein the holding unit (17, 19) comprises a frequency filter (43) and a frequency-voltage converter (45).

10. Safety switch according to any of claims 1 to 9, further comprising a second holding unit (19, 17), wherein each switch (3, 5) is associated with a holding unit (17, 19) which can be prompted by the control unit (9) to generate the closing signal at most for a predetermined holding period and to forward it to the relevant switch (3, 5) associated therewith independently of the control unit (7).

11. Safety switch according to any of claims 1 to 10, further comprising a second control unit (8), wherein each switch (3, 5) is associated with a control unit (7, 8) and a holding unit (17, 19), wherein the holding unit (17, 19) can be prompted by the associated control unit (7, 8) to generate the closing signal at most for a predetermined holding period and to forward it to the relevant switch (3, 5) associated therewith independently of the control unit (7, 8).

12. Method for operating a safety switch (1) according to any of claims 1 to 11, comprising:
recognition that a generation of the closing signal is to be briefly interrupted by the control unit (7) as part of a reset or self-test, prompting of the holding unit (17, 19) to generate the closing signal at most for a predetermined holding period and to forward it to the at least one of the switches (3, 5) independently of the control unit (7);
interruption of the generation of the closing signal by the control unit (7) as part of the reset or self-test.

13. Safety chain (200) of a means of transport, in particular an elevator system (300), comprising at least one safety switch (1) according to any of claims 1 to 11.

14. Elevator system comprising at least one safety switch according to any of claims 1 to 11 and/or a safety chain according to claim 13.

## Revendications

1. Commutateur de sécurité (1) pour une installation électrique, notamment pour une chaîne de sécurité (200) d'une installation d'ascenseur (300), comprenant :
deux commutateurs (3, 5) connectés en série l'un à l'autre et à un élément de charge (21) à commuter, chacun des commutateurs (3, 5) étant conçu pour être maintenu dans un état fermé par la réception d'un signal de fermeture, et passant dans un état ouvert en l'absence du signal de fermeture ;
une unité de commande (7) conçue pour générer le signal de fermeture en présence d'un état de consigne et pour l'acheminer vers au moins l'un des commutateurs (3, 5), et pour n'acheminer aucun signal de fermeture vers l'au moins un commutateur (3, 5) en présence d'un état de non-consigne ;
**caractérisé en ce qu'**une unité de maintien (17, 19) qui peut être amenée, par l'unité de commande (7), à générer le signal de fermeture indépendamment de l'unité de commande (7) au maximum pendant un temps de maintien prédéterminé et à l'acheminer vers au moins l'un des commutateurs (3, 5), et **en ce que** l'unité de commande (7) est conçue pour amener l'unité de maintien (17, 19) à générer le signal de fermeture au maximum pendant le temps de maintien prédéterminé avant une réinitialisation ou un autotest devant être effectué(e) par l'unité de commande (7), et à l'acheminer vers l'au moins un commutateur (3, 5).

2. Commutateur de sécurité selon la revendication 1, dans lequel l'unité de commande (7) est conçue pour interrompre momentanément la génération du signal de fermeture dans le cadre d'une réinitialisation ou d'un autotest à intervalles de temps réguliers ou en présence d'un signal de déclenchement appliqué de l'extérieur, et est conçue pour amener l'unité de maintien (17, 19) à générer le signal de fermeture indépendamment de l'unité de commande (7) au maximum pendant le temps de maintien prédéterminé et à l'acheminer vers l'au moins un commutateur (3, 5).

3. Commutateur de sécurité selon la revendication 2, dans lequel une période de temps permettant d'effectuer la réinitialisation ou l'autotest est plus courte que le temps de maintien.

4. Commutateur de sécurité selon l'une des revendications 1 à 3, dans lequel le temps de maintien est compris entre 1 µs et 100 ms, de préférence entre 1 ms et 20 ms.

5. Commutateur de sécurité selon l'une des revendications 1 à 4, dans lequel l'unité de commande (7) et l'unité de maintien (17, 19) sont conçues pour que l'unité de commande (7) puisse amener l'unité de maintien (17, 19) à générer ensuite le signal de fermeture exclusivement en émettant un signal prédéterminé variable dans le temps au maximum pendant le temps de maintien maximal prédéterminé et à l'acheminer vers l'au moins un commutateur (3, 5).

6. Commutateur de sécurité selon l'une des revendications 1 à 5, dans lequel l'unité de maintien (17, 19) comporte une mémoire (47, 49) permettant de stocker de l'énergie électrique, et dans lequel l'unité de commande (7) et l'unité de maintien (17, 19) sont conçues pour que l'unité de commande (7) recharge la mémoire (47, 49) de l'unité de maintien (17, 19) en énergie électrique, et amène ainsi l'unité de maintien (17, 19) à générer ensuite le signal de fermeture au maximum pendant le temps de maintien prédéterminé et à l'acheminer vers l'au moins un commutateur (3, 5).

7. Commutateur de sécurité selon la revendication 6, dans lequel la mémoire (47, 49) comprend un condensateur, une bobine ou un supercondensateur.

8. Commutateur de sécurité selon l'une des revendications 6 ou 7, dans lequel l'unité de commande (7) et l'unité de maintien (17, 19) sont conçues pour que l'unité de commande (7) puisse recharger, en énergie électrique, la mémoire (47, 49) de l'unité de maintien (17, 19) exclusivement en appliquant un signal de tension électrique alternative ayant une fréquence dans une bande de fréquence prédéterminée, et amène ainsi l'unité de maintien (17, 19) à générer ensuite le signal de fermeture au maximum pendant le temps de maintien maximal prédéterminé et à l'acheminer à l'au moins un commutateur (3, 5).

9. Commutateur de sécurité selon la revendication 8, dans lequel l'unité de maintien (17, 19) comprend un filtre de fréquences (43) et un convertisseur fréquence-tension (45).

10. Commutateur de sécurité selon l'une des revendications 1 à 9, comprenant en outre une seconde unité de maintien (19, 17), chaque commutateur (3, 5) étant associé à une unité de maintien (17, 19) qui peut être amenée, par l'unité de commande (9), à générer le signal de fermeture au maximum pendant un temps de maintien et à l'acheminer, indépendamment de l'unité de commande (7), vers le commutateur (3, 5) associé respectif.

11. Commutateur de sécurité selon l'une des revendications 1 à 10, comprenant en outre une seconde unité de commande (8), dans lequel une unité de commande (7, 8) et une unité de maintien (17, 19) sont associées à chaque commutateur (3, 5), l'unité de maintien (17, 19) pouvant être amenée, par l'unité de commande associée (7, 8), à générer le signal de fermeture au maximum pendant un temps de maintien et à l'acheminer, indépendamment de l'unité de commande (7, 8), vers le commutateur (3, 5) associé respectif.

12. Procédé pour faire fonctionner un commutateur de sécurité (1) selon l'une des revendications 1 à 11, comprenant :
le fait de reconnaître qu'une génération du signal de fermeture par l'unité de commande (7) doit être interrompue momentanément dans le cadre d'une réinitialisation ou d'un autotest,
le fait d'amener l'unité de maintien (17, 19) à générer le signal de fermeture au maximum pendant un temps de maintien prédéterminé et à l'acheminer, indépendamment de l'unité de commande (7), vers l'au moins un commutateur (3, 5);
l'interruption de la génération du signal de fermeture par l'unité de commande (7) dans le cadre de la réinitialisation ou de l'autotest.

13. Chaîne de sécurité (200) d'un moyen de transport, notamment d'une installation d'ascenseur (300), comprenant au moins un commutateur de sécurité (1) selon l'une des revendications 1 à 11.

14. Installation d'ascenseur comprenant au moins un commutateur de sécurité selon l'une des revendications 1 à 11 et/ou une chaîne de sécurité selon la revendication 13.
